# EUROPÄISCHE PATENTSCHRIFT

(11) **EP 0 798 474 B1**
(45) Veröffentlichungstag und Bekanntmachung des Hinweises auf die Patenterteilung: **07.06.2000**
(21) Anmeldenummer: 97103766.8
(22) Anmeldetag: 06.03.1997
(51) Int. Cl.: F16B 37/08

(54) **Befestigungselementpaar**
Connecting assembly
Ensemble de connexion

(30) Priorität: 26.03.1996 DE 29605616 U
(43) Veröffentlichungstag der Anmeldung: 01.10.1997
(73) Patentinhaber: Hellermann Tyton GmbH, 25436 Tornesch (DE)
(72) Erfinder: Matschiner, Bernd, Dr.-Ing., 25495 Kummerfeld (DE)
(74) Vertreter: Glawe, Delfs, Moll & Partner

(56) Entgegenhaltungen:
- WO-A-89/02403
- FR-A- 2 474 134
- GB-A- 578 717
- US-A- 3 881 759

## Beschreibung

Die Erfindung bezieht sich auf ein Befestigungselementpaar gemäß dem Oberbegriff des Anspruchs 1. Es ist ein Befestigungselementpaar dieser Art bekannt (GB-A-578717), bei dem die Klammer gegen unbeabsichtigtes seitliches Abziehen von dem Bolzen dadurch gesichert ist, daß die mit dem Bolzenumfang zusammenwirkenden Kanten der Rastzähne konkav gerundet sind. Auf ihrer der Öffnung zugewandten Seite springen sie weiter zueinander vor als in ihrer Mitte und bilden so Sperrvorsprünge, die den Bolzen in der geklammerten Stellung festhalten. Um die Klammer von dem Bolzen abziehen zu können, müssen die Rastzähne zuvor angehoben werden, damit der freie Abstand zwischen den Sperrvorsprüngen für den Durchlaß des Bolzens vergrößert wird. Dies kann beträchtliche Schwierigkeiten bereiten, insbesondere wenn die von dem Befestigungselementpaar übertragenen Befestigungskräfte dem Anheben der Rastzähne entgegenwirken oder wenn die Klammer schlecht zugänglich ist.

Die Erfindung will demgegenüber ein Befestigungselementpaar schaffen, das einerseits eine sichere Verbindung ohne Gefahr zufälligen Lösens ermöglicht und andererseits leicht wieder geöffnet werden kann.

Die erfindungsgemäße Lösung besteht in den Merkmalen des Anspruchs 1 und vorzugsweise denjenigen der Unteransprüche.

Sie beruht auf dem Gedanken, daß die Verbindungs- und Befestigungsfunktion einerseits und die Sicherungsfunktion andererseits, verschiedenen Teilen des Befestigungselementpaar zugeordnet werden. Die Befestigungskräfte, die von dem Befestigungselementpaar bei normaler Verwendung aufzubringen sind, wirken in der Bolzenlängsrichtung nur auf die Rastvorzähne, während zur Sicherung gegen zufällige seitliche Kräfte davon getrennte Sperrvorsprünge vorgesehen sind, die von den Längskräften unbeeinflußt ist. Zweckmäßigerweise sind symmetrisch zwei einander gegenüberliegende Sperrvorsprünge vorgesehen. Diese begrenzen die Bolzenöffnung entsprechend dem Bolzendurchmesser, so daß der Bolzen bei Benutzung sicher im Bereich der Rastzähne gehalten wird.

Es ist zwar bekannt (FR-A-2 474 134), Halterippen in einer Aufnahmeöffnung eines Elements zum Halten einer Leitung sowohl zum Stützen dieser Leitung als auch zum Sichern gegen unbeabsichtigtes Lösen der Leitung aus der Aufnahmeöffnung auszubilden. Eine Trennung der Stützfunktion von der Sicherungsfunktion ist nicht vorgesehen.

Damit der mindestens eine Sperrvorsprung eine hinreichende Kraft gegen zufälliges Entweichen des Bolzens aus der Klaue aufbringt, ist er zweckmäßigerweise als einwärts gerichtete Federzunge ausgebildet. Dies erbringt auch den Vorteil, daß die Montage der Befestigungselemente gewünschtenfalls auch dadurch geschehen kann, daß die Klammer seitlich mit geringerer Kraft als sie zum Abziehen erforderlich ist, auf den Bolzen aufgeschoben wird.

Die Klammer ist zweckmäßigerweise plättchenförmig. Der Kopf des Bolzens ist zweckmäßigerweise mit einer Andruckfeder versehen, die dafür sorgt, daß auch dann, wenn der durch den Anwendungszweck vorgegebene Befestigungsabschnitt zwischen Bolzenkopf und Klammer nicht übereinstimmen sollte mit einem durch die Rastabstände des Bolzens vorgegebenen Abstand, ein sicherer, klapperfreier Befestigungssitz gewährleistet ist.

Bolzen und Klammer können durch ein dünnes Band verbunden sein, damit bei Verwendung stets beide Elemente zur Hand sind. Auch besteht die Möglichkeit, das Band zur Befestigung zu verwenden, beispielsweise eines Etiketts.

Die Erfindung wird im folgenden näher unter Bezugnahme auf die Zeichnungen erläutert, die ein vorteilhaftes Ausführungsbeispiel veranschaulichen. Darin zeigen:
- Fig. 1: eine erste Ansicht und
- Fig. 2: eine zweite, lotrecht zu Fig. 1 gesehenen Ansicht des nicht montierten Befestigungselementpaares.

Der Rastbolzen 1 hat einen Schaft 2 mit einer Vielzahl von ringförmig umlaufenden Rastvorsprüngen 3, die dem freien Ende des Bolzens eine konische Fläche zwecks leichterer Montierbarkeit entgegenrichten. Die andere Seite ist flach. Selbstverständlich könnten die Vorsprünge auch anders geformt sein. Ringförmige Geschlossenheit ist nicht erforderlich. Sie hat aber den Vorteil, daß sie die Montage vereinfacht, weil nicht auf eine bestimmte Orientierung des Bolzens bei der Montage geachtet zu werden braucht.

Der Kopf 4 des Bolzens ist mit zwei Federzungen 5 versehen, die sich schräg der Montagerichtung entgegenstrecken. Wenn das Elementpaar an einem Gegenstand befestigt wird oder zwei Gegenstände aneinanderhalten soll, wird eine Montagekraft verwendet, die zu einer elastischen Verformung der Federzungen 5 führt, so daß klapperfreier Sitz gewährleistet ist.

Über ein dünnes Band 6 einstückig verbunden ist mit dem Bolzen 1 die Klammer 7, die zwecks leichterer Handhabbarkeit plättchenförmig ausgestreckt gestaltet ist. Etwa in ihrem mittleren Bereich enthält sie eine Bolzenöffnung 8, die auf ihrer Seite 9 geschlossen ist und dort einen abgerundeten Kragen trägt oder in anderer Weise so geformt ist, daß die Rastvorsprünge 3 des Bolzens 1 sich daran während der Montage nicht verhaken können sondern leicht daran vorbeigleiten.

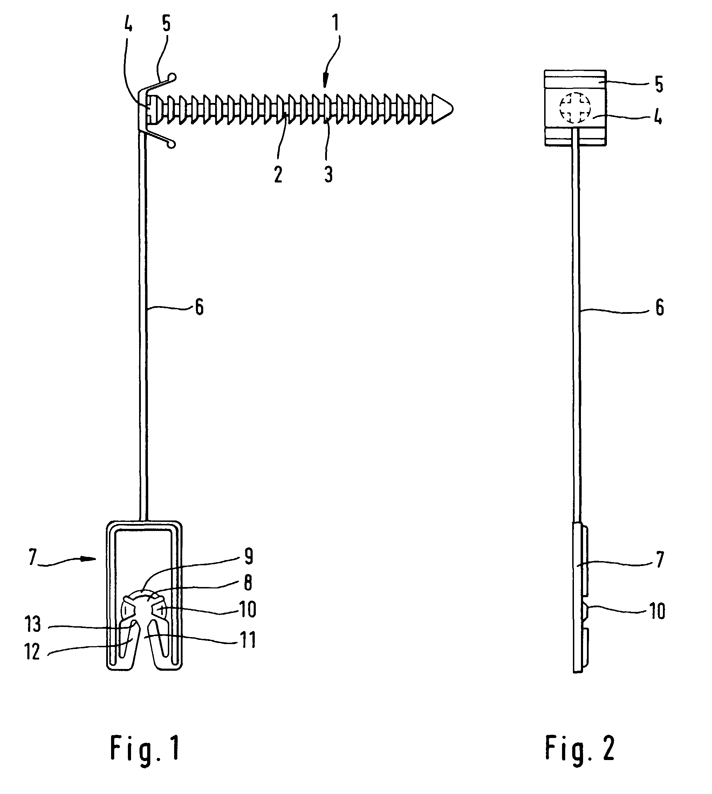

Auf den beiden quer zur Seite 9 liegenden Seiten der Bolzenöffnung 8 sind zwei einander gegenüberliegende Rastzähne 10 vorgesehen, die zu der in Fig. 2 rechten Seite hin schräg verlaufen können, um der Einführung des Bolzens von links nach rechts (ebenfalls bezogen auf Fig. 2) weniger Widerstand entgegenzusetzen aber der Lösung des Bolzens in der umgekehrten Richtung hohen Widerstand zu leisten.

Auf der vierten Seite weist die Bolzenöffnung 8 eine Abziehöffnung 11 auf, die zwischen zwei als einwärts gerichtete Federzungen 12 ausgebildeten Sperrvorsprüngen liegt. Die Federzungen 12 strecken der Bolzenöffnung 8 Stirnflächen 13 entgegen, die derart abgeschrägt sind, daß bei der Abziehbewegung eine Keilwirkung auf die Federzungen ausgeübt wird, durch die sie sich öffnen. Jedoch leisten sie der Abziehbewegung einen deutlichen Widerstand, so daß sie nicht zufällig eintreten kann. Umgekehrt erzeugen sie geringeren Widerstand, wenn man den Bolzen von der Seite her in die Bolzenöffnung 8 einbringen will. Es ist also nicht unbedingt erforderlich, den Bolzen in seiner Längsrichtung in die Bolzenöffnung 8 einzuführen; er kann auch von der Seite her eingebracht werden. Beide Bewegungsarten können auch miteinander verbunden werden.

Die Stirnflächen 13 der Federzungen 12 sind so gelegen, daß der Bolzen im Eingriffsbereich der Rastzähne 10 gehalten wird. Somit wird die Bolzenöffnung 8 auf der dem Kragen 9 gegenüberliegenden Seite durch diese Stirnflächen 13 begrenzt.

## Patentansprüche

1. Befestigungslementpaar bestehend aus einem mit einer Reihe von Rastvorsprüngen (3) versehenen Bolzen (1) und einer auf den Bolzen in dessen Längsrichtung aufschiebbaren Klammer (7), die eine Bolzenöffnung (8) aufweist, in der mindestens ein Paar von einander gegenüberliegenden, mit den Rastvorsprüngen (3) zusammenwirkenden Rastzähnen (10) angeordnet ist, die auf einer dritten Seite (9) geschlossen ist und auf der der dritten Seite (9) gegenüberliegenden vierten Seite eine Abziehöffnung (11) aufweist, dadurch gekennzeichnet, daß die Abziehöffnung (11) mit wenigstens einem nachgiebigen, von den Rastzähnen (10) gesonderten Sperrvorsprung (12) versehen ist.

2. Befestigungselementpaar nach Anspruch 1, dadurch gekennzeichnet, daß der Sperrvorsprung (12) die Bolzenöffnung (8) entsprechend dem Bolzendurchmesser begrenzt.

3. Befestigungselementpaar nach Anspruch 1 oder 2, dadurch gekennzeichnet, daß zwei einander gegenüberliegende Sperrvorsprünge (12) vorgesehen sind.

4. Befestigungselementpaar nach einem der Ansprüche 1 bis 3, dadurch gekennzeichnet, daß der Sperrvorsprung (12) von einer einwärts gerichteten Federzunge gebildet ist.

5. Befestigungselementpaar nach einem der Ansprüche 1 bis 4, dadurch gekennzeichnet, daß die Klammer (7) plättchenförmig ist.

6. Befestigungselementpaar nach einem der Ansprüche 1 bis 5, dadurch gekennzeichnet, daß der Bolzenkopf (4) mit einer Andruckfeder (5) versehen ist.

7. Befestigungselementpaar nach einem der Ansprüche 1 bis 6, dadurch gekennzeichnet, daß der Bolzen (1) und die Klammer (7) durch ein dünnes Band (6) verbunden sind.

## Claims

1. A fastening element pair comprising a bolt (1) provided with a series of locating projections (3) and a clip (7) which can fitted on to the bolt in its longitudinal direction and which has a bolt opening (8), in which is disposed at least one pair of mutually opposed locating teeth (10) which co-operate with the locating projections (3) and which is closed on a third side (9) and has a removal opening (11) on the fourth side opposite the third side, characterised in that the removal opening (11) is provided with at least one flexible locking projection (12) separate from the locating teeth (10).

2. A fastening element pair according to Claim 1, characterised in that the locking projection (12) bounds the bolt opening (8) corresponding to the bolt diameter.

3. A fastening element pair according to Claim 1 or 2, characterised in that two mutually opposed locking projections (12) are provided.

4. A fastening element pair according to any one of Claims 1 to 3, characterised in that the locking projection (12) is formed by an inwardly directed spring tongue.

5. A fastening element pair according to any one of Claims 1 to 4, characterised in that the clip (7) is lamellar.

6. A fastening element pair according to any one of Claims 1 to 5, characterised in that the bolt head (4) is provided with a pressure spring (5).

7. A fastening element pair according to any one of Claims 1 to 6, characterised in that the bolt (1) and the clip (7) are connected by a thin strip (6).

## Revendications

1. Ensemble d'éléments de fixation constitué d'une tige (1) pourvue d'une rangée de saillies d'encliquetage (3) et d'une agrafe (7) à enfiler sur la tige dans sa direction longitudinale, laquelle agrafe présente une ouverture (8) pour la tige dans laquelle est disposée au moins une paire de dents d'encliquetage (10) opposées l'une à l'autre et coopérant avec les saillies d'encliquetage (3), est fermée sur un troisième côté (9) et présente une ouverture d'extraction (11) sur le quatrième côté, opposé au troisième côté (9), caractérisé en ce que l'ouverture d'extraction (11) est pourvue d'au moins une saillie de blocage (12) souple, séparée des dents d'encliquetage (10).

2. Ensemble d'éléments de fixation selon la revendication 1, caractérisé en ce que la saillie de blocage (12) limite l'ouverture (8) pour la tige conformément au diamètre de la tige.

3. Ensemble d'éléments de fixation selon la revendication 1 ou 2, caractérisé en ce que deux saillies de blocage (12) opposées l'une à l'autre sont prévues.

4. Ensemble d'éléments de fixation selon l'une des revendications 1 à 3, caractérisé en ce que la saillie de blocage (12) est formée par une languette élastique dirigée vers l'intérieur.

5. Ensemble d'éléments de fixation selon l'une des revendications 1 à 4, caractérisé en ce que l'agrafe (7) est en forme de plaquette.

6. Ensemble d'éléments de fixation selon l'une des revendications 1 à 5, caractérisé en ce que la tête (4) de la tige est pourvue d'un ressort de pression (5).

7. Ensemble d'éléments de fixation selon l'une des revendications 1 à 6, caractérisé en ce que la tige (1) et l'agrafe (7) sont reliées par une mince bande (6).
